# EUROPEAN PATENT SPECIFICATION

(11) **EP 1 415 234 B1**
(45) Date of publication and mention of the grant of the patent: **17.01.2007**
(21) Application number: 02761026.0
(22) Date of filing: 21.11.2001
(51) Int. Cl.: G06F 13/40

(54) **HIGH DENSITY SEVERLETS UTILIZING HIGH SPEED DATA BUS**
SERVERLETS MIT HOHER DICHTE MITTELS HOCHGESCHWINDIGKEITS-DATENBUS
SERVELETS A HAUTE DENSITE UTILISANT UN BUS DE DONNEES A GRANDE VITESSE

(30) Priority: 19.12.2000 US 739388
(43) Date of publication of application: 06.05.2004
(73) Proprietor: INTEL CORPORATION, Santa Clara, CA 95052 (US)
(72) Inventor: YOUNG, Gene, F., Lexington, SC 29702 (US)
(74) Representative: Straus, Alexander
(86) International application number: PCT/US2002/020778
(87) International publication number: WO 2004/006108

(56) References cited:
- US-A- 5 625 405
- US-A- 5 675 738
- US-A- 5 944 789
- US-A- 6 128 467

## Description

### FIELD

The present invention is directed to a system module for coupling a network to I/O resources. More particularly, the present invention is directed to a system module having a plurality of serverlets that share I/O resources such as disk systems.

### BACKGROUND

As technology has progressed, the processing capabilities of computer systems has increased dramatically. This increase has led to a dramatic increase in the types of software applications that can be executed on a computer system as well as an increase in the functionality of these software applications. The increase in processing capabilities also allows modern computer systems to execute multiple software applications concurrently, such as by including multiple microprocessors in a computer system or by sharing microprocessor time. Additionally, technological advancements have led the way for multiple computer systems, each executing multiple software applications, to be easily connected together via a network.

Conventional servers typically are self-contained units that include their own functionality such as disk drive systems; cooling systems, input/output (I/O) subsystems and power subsystems. If multiple servers are desired or needed then each server may be housed within its own independent cabinet (or housing). However, it is desirable to reduce the size of servers so as to provide the functionality of servers in smaller sized cabinets. At the same time, it is desirable to have a plurality of processors each capable of separately running simultaneously.

US-A-5 625 405 describes a system that includes a video server (V1) and a store management server S5 that connect to a disk loop control (F3), disk array control (F4), and tape library control (F5) via a multi-port switch (M2). The video server (V1) interfaces with other servers (S1-S6) through a local area network (T1).

### BRIEF DESCRIPTION OF THE DRAWINGS

The foregoing and a better understanding of the present invention will become apparent from the following detailed description of example embodiments and the claims when read in connection with the accompanying drawings, all forming a part of the disclosure of this invention. While the foregoing and following written and illustrated disclosure focuses on disclosing example embodiments of the invention, it should be clearly understood that the same is by way of illustration and example only and the invention is not limited thereto.

The following represents brief descriptions of the drawings in which like reference numerals represent like elements and wherein:
FIG. 1 is an example data network;
FIG. 2 is a block diagram of an example processing system in order to show a processing system coupled to a data communications network;
FIG. 3 is a block diagram of another example processing system in order to show a processing system coupled to a data communications network;
FIG. 4 is a diagram of a serverlet according to an example embodiment of the present invention;
FIG. 5 is a diagram of a system module according to an example embodiment of the present invention;
FIG. 6 is a diagram showing interconnections between switches and serverlets according to an example embodiment of the present invention;
FIG. 7 is a diagram of a switching device coupled to I/O resources according to an example embodiment of the present invention; and
FIG. 8 is a diagram of a switching device coupled to a switch fabric network according to an example embodiment of the present invention.

### DETAILED DESCRIPTION

Before beginning a detailed description of the subject invention, mention of the following is in order. When appropriate, like reference numerals and characters may be used to designate identical, corresponding or similar components in differing figure drawings. In the detailed description to follow, example sizes and values may be given, although the present invention is not limited to the same. Additionally, well known power/ground connections to integrated circuits (ICs) and other components may not be shown within the FIGS. for simplicity of illustration and discussion, and so as not to obscure the invention. The invention may be further described with respect to a signal or signals sent across a signal line or signal lines. This terminology is intended to be interchangeable between the singular and the plural. The arrangements may be shown in block diagram form in order to avoid obscuring the invention, and also because specifics with respect to implementation of such block diagram arrangements may depend upon the platform within which the present invention is to be implemented. These specifics are within the purview of one skilled in the art. Further, where specific details (e.g., circuits) are set forth in order to describe example embodiments of the invention, it should be apparent to one skilled in the art that the invention can be practiced without these specific details. Finally, it should be apparent that any combination of hard-wired circuitry and software instructions can be used to implement embodiments of the present invention. That is, the present invention is not limited to any specific combination of hardware circuitry and software instructions.

The present invention is applicable for use with all types of data networks and clusters designed to link together computers, servers, peripherals, storage devices, and communication devices for communications. Examples of such data networks may include a local area network (LAN), a wide area network (WAN), a campus area network (CAN), a metropolitan area network (MAN), a global area network (GAN), a storage area network and a system area network (SAN), including data networks using Next Generation I/O (NGIO), Future I/O (FIO), Infiniband and Server Net and those networks which may become available as computer technology develops in the future. LAN systems may include Ethernet, FDDI (Fibre Distributed Data Interface) Token Ring LAN, Asynchronous Transfer Mode (ATM) LAN, Fibre Channel, and Wireless LAN.

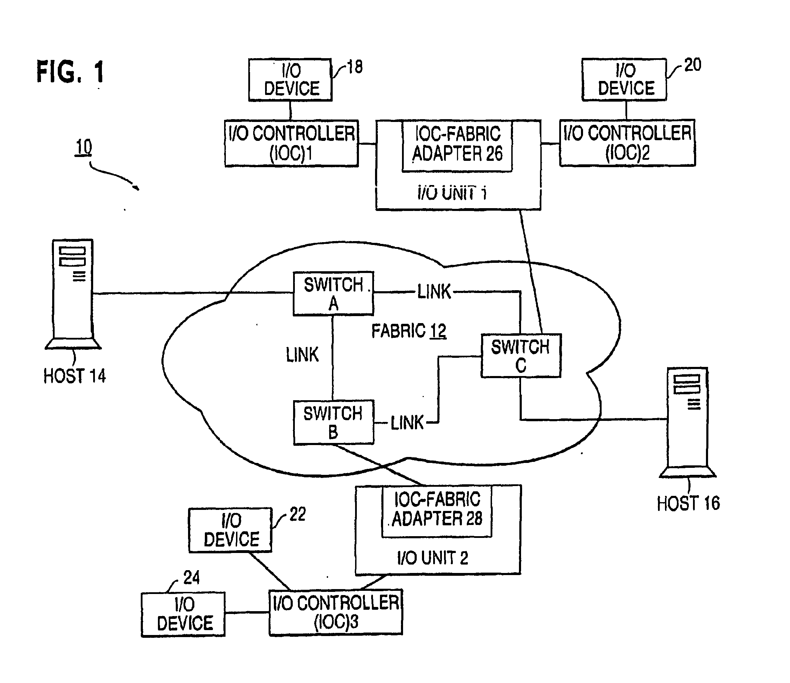

FIG. 1 shows an example data network having several interconnected endpoints (nodes) for data communications. As shown in FIG. 1, the data network 10 may include, for example, an interconnection fabric (hereinafter referred to as "switched fabric") 12 of one or more switches A, B and C and corresponding physical links, and several endpoints (nodes) that may correspond to one or more I/O units 1 and 2, computers and servers such as, for example, host 14 and host 16. I/O unit 1 may include one or more controllers coupled thereto, including I/O controller 1 (IOC1) and I/O controller 2 (IOC2). Likewise, I/O unit 2 may include an I/O controller 3 (IOC3) coupled thereto. Each I/O controller 1, 2 and 3 (IOC1, IOC2 and IOC3) may operate to control one or more I/O devices. For example, I/O controller 1 (IOC1) of the I/O unit 1 may be coupled to I/O device 18, while I/O controller 2 (IOC2) may be coupled to I/O device 20. Similarly, I/O controller 3 (IOC3) of the I/O unit 2 may be coupled to I/O devices 22 and 24. The I/O devices may be any of several types of I/O devices, such as storage devices (e.g., a hard disk drive, tape drive) or other I/O device.

The hosts and I/O units including attached I/O controllers and I/O devices may be organized into groups known as clusters, with each cluster including one or more hosts and typically one or more I/O units (each I/O unit including one or more I/O controllers). The hosts and I/O units may be interconnected via a switched fabric 12, which is a collection of switches A, B and C and corresponding physical links connected between the switches A, B and C.

In addition, each I/O unit may include one or more I/O controller-fabric (IOC-fabric) adapters for interfacing between the switched fabric 12 and the I/O controllers (e.g., IOC1, IOC2 and IOC3). For example, IOC-fabric adapter 26 may interface the I/O controllers 1 and 2 (IOC1 and IOC2) of the I/O unit 1 to the switched fabric 12, while the IOC-fabric adapter 28 may interface the I/O controller 3 (IOC3) of the I/O unit 2 to the switched fabric 12.

The specific number and arrangement of hosts, I/O units, I/O controllers, I/O devices, switches and links shown in FIG. 1 are provided simply as an example data network. A wide variety of implementations and arrangements of any number of hosts, I/O units, I/O controllers, I/O devices, switches and links in all types of data networks may be possible.

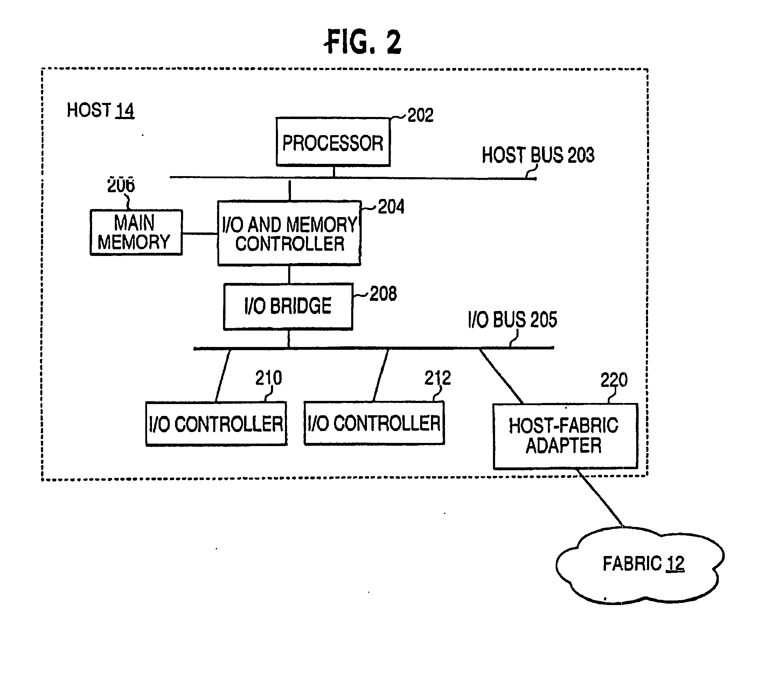

An example embodiment of a host (e.g., host 14 or host 16) may be shown in FIG. 2. As shown in FIG. 2, the host 14 may include a processor 202 coupled to a host bus 203. An I/O and memory controller 204 (or chipset) may be coupled to the host bus 203. A main memory 206 may be coupled to the I/O and memory controller 204. An I/O bridge 208 may operate to bridge or interface between the I/O and memory controller 204 and an I/O bus 205. Several I/O controllers may be attached to I/O bus 205, including I/O controllers 210 and 212. I/O controllers 210 and 212 (including any I/O devices connected thereto) may provide bus-based I/O resources.

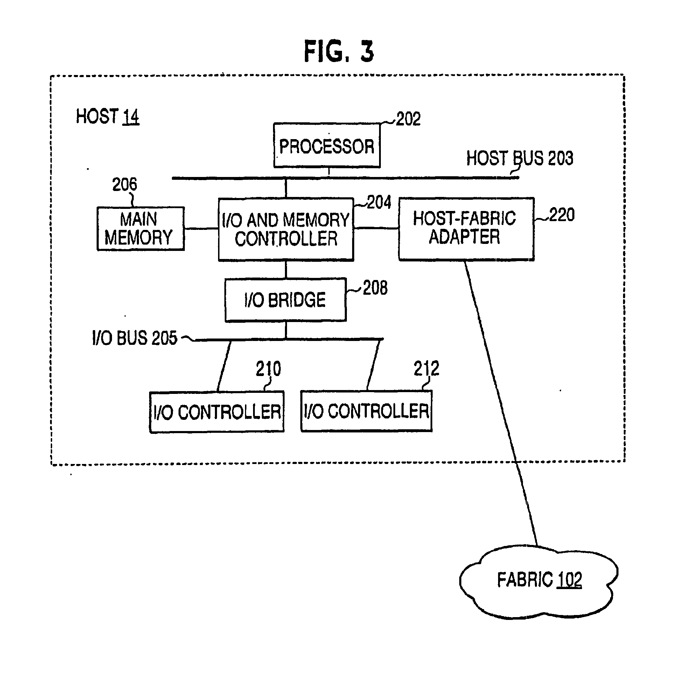

One or more host-fabric adapters 220 may also be coupled to the I/O bus 205. Alternatively, the host-fabric adapter 220 may be coupled directly to the I/O and memory controller (or chipset) 204 to avoid limitations of the I/O bus 205 (see FIG. 3). In either situation, the host-fabric adapter 220 may be considered to be a type of a network interface card (e.g., NIC which usually includes hardware and firmware) for interfacing the host 14 to the switched fabric 12. The host-fabric adapter 220 may be utilized to provide fabric communication capabilities for the host 14. For example, the host-fabric adapter 220 may convert data between a host format and a format that is compatible with the switched fabric 12. For data sent from the host 14, the host-fabric adapter 220 may format the data into one or more packets containing a sequence of one or more cells including header information and data information.

The hosts or I/O units (and associated host or IOC-fabric adapters) of the data network may be compatible with the *"Next Generation Input*/*Output (NGIO) Specification"* as set forth by the NGIO Forum on March 26, 1999. The hosts or I/O units of the data network may also be compatible with the Infiniband architecture. Infiniband information/specifications are under development and will be published by the Infiniband Trade Association (formed August 27, 1999) having the Internet address of http://www.Infinibandta.org.

The host-fabric adapter 220 may be a host channel adapter (HCA), and the IOC-fabric adapters may be target channel adapters (TCA). The host channel adapter (HCA) may be used to provide an interface between the host 14 or 16 and the switched fabric 12 via high speed serial links. Similarly, target channel adapters (TCA) may be used to provide an interface between the switched fabric 12 and the I/O controller of either an I/O unit 1 or 2, or another network, including, but not limited to, local area network (LAN), wide area network (WAN), Ethernet, ATM and Fibre Channel networks, via high speed serial links. Both the host channel adapter (HCA) and the target channel adapter (TCA) may be implemented in compliance with *"Next Generation I*/*O Architecture: Host Channel Adapter Specification, Revision 1.0"* as set forth by Intel Corp. on May 13, 1999 or in accordance with the Infiniband architecture. However, NGIO and Infiniband are merely example embodiments or implementations, and the invention is not limited thereto.

Embodiments of the present invention may provide a system module for coupling a switch fabric network to I/O resources (such as a first disk system and a second disk system). The system module may include a first serverlet, a second serverlet, and a first switching device coupled to each of the first serverlet and the second serverlet. The first switching device may be further coupled to the I/O resources such that the first serverlet and the second serverlet share I/O resources.

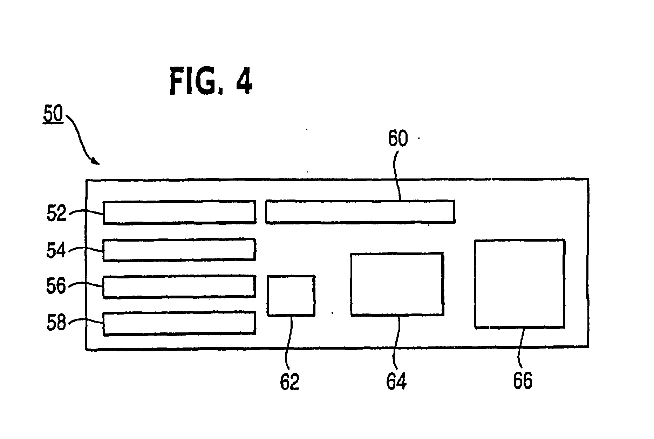

FIG. 4 is a diagram of a serverlet 50 (also called a server module) according to an example embodiment of the present invention. Other embodiments and configurations are also within the scope of the invention. The serverlet 50 contains components of a conventional server but does not contain all the functionality of a server. For example, the serverlet 50 may include four dual in-line memory modules (DIMMs) 52, 54, 56 and 58, an on-board power conversion unit 60, a unit 62, a unit 64 and a processor unit 66 all located within a single assembly. However, the serverlet 50, in this example, does not contain a cooling system or a disk drive system and thus does not include all the components of a conventional server. The unit 62 may interface to local I/O device and memory while the unit 64 may interface the processor unit 66 to an I/O and memory. The unit 62 may be coupled to the unit 64 by a data bus such as a hublink data bus. A hublink data bus such as HL2.0 or HL8 is a low pincount high speed point-to-point data bus. Other types of data buses are also within the scope of the present invention. The components of the serverlet 50 operate such that the serverlet 50 includes appropriate processor, memory, interface logic to connect the processor to memory and I/O buses, and power conversion. Each component or module may correspond to a separate microchip on a printed circuit board.

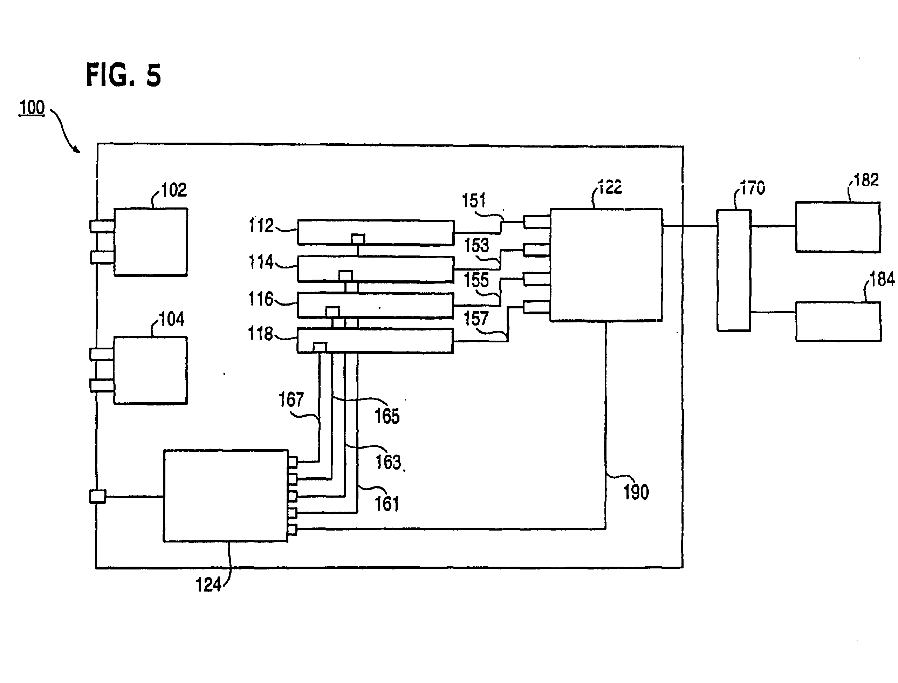

FIG. 5 is a diagram of a system module 100 according to an example embodiment of the present invention. Other embodiments and configurations are also within the scope of the present invention. Further, while FIG. 5 shows interconnections between various modules, components, units or devices, this figure does not show all the interconnections as will be described below.

The system module 100 may include a first serverlet 112, a second serverlet 114, a third serverlet 116 and a fourth serverlet 118 all located within a single assembly or casing. Each of the serverlets 112, 114, 116 and 118 may correspond to the serverlet 50 shown in FIG. 4. That is, each of the serverlets 112, 114, 116 and 118 may include the appropriate processing capabilities, memory capabilities, interface logic capabilities and power conversion capabilities as described above. However, it is desirable that the four serverlets share I/O resources such as disk systems. The serverlets may also share a cooling system provided for or within the single housing or assembly.

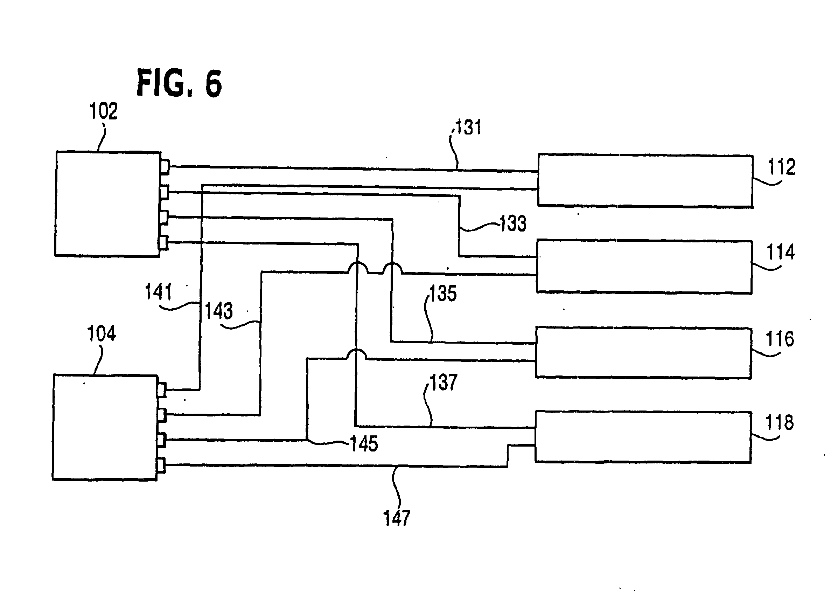

The system module 100 may further include a first switch 102, a second switch 104, a switching unit 122 and a server management interface unit 124. The first switch 102 and the second switch 104 may be coupled to the above-described switch fabric network such as an Infiniband network, an Ethernet network or a Fibrechannel network. The second switch 104 may be redundant to the first switch 102 so that the serverlets 112, 114, 116 and 118 may communicate with the network even in the event of a loss of a switch or connection. That is, having redundant switches and redundant connections from the switches to the fabric allows for a switch to fail and for the serverlets 112, 114, 116 and 118 to still function. Although not shown in FIG. 5, the first switch 102 and the second switch 104 may be coupled to the first serverlet 112, the second serverlet 114, the third serverlet 116 and the fourth serverlet 118 by a data bus such as a hublink data bus as will be described with respect to FIG. 6. The switching unit 122 may also be referred to as a redundant array of inexpensive disks/switching unit (i.e., a RAID/switching unit). One skilled in the art would understand that each of the switches 102, 104 and/or units 122 and 124 or any combination thereof may be a self contained integrated circuit (or microchip) that is connectable with the system module 100. For example, the server management interface unit 124 and the switching unit 122 may each be a separate microchip that is connectable with the system module 100 on a printed circuit board.

The switching unit 122 may be coupled to a backplane such as a small computer system interface (SCSI) backplane 170, which may be coupled, in turn, to I/O resources such as a first disk system 182 and a second disk system 184. As discussed above, the first switch 102 and the second switch 104 of the system module 100 may be coupled to a switch fabric network such as an Infiniband network, an Ethernet network and a Fibre Channel network. Accordingly, the system module 100 may couple a switch fabric network to a plurality of I/O resources such as the first disk system 182 and the second disk system 184. The system module 100 may also allow the serverlets 112, 114, 116 and 118 to share I/O resources.

Various interconnections of the system module 100 will now be explained. The server management interface unit 124 may be separately coupled to each of the serverlets 112, 114, 116 and 118 by signal lines so as to control their operation. For example, the server management interface unit 124 may be coupled to the first serverlet 112 by a signal line 161 and may be coupled to the second serverlet 114 by a signal line 163. The server management interface unit 124 may be further coupled to the third serverlet 116 by a signal line 165 and may be coupled to the fourth serverlet 118 by a signal line 167. The server management interface unit 124 may be coupled so as to control the switching unit 122. The server management interface unit 124 may be used to configure and test components of the system module 100.

The first serverlet 112 may be coupled to the switching unit 122 by a signal line 151, the second serverlet 114 may be coupled to the switching unit 122 by a signal line 153, the third serverlet 116 may be coupled to the switching unit 122 by a signal line 155, and the fourth serverlet 118 may be coupled to the switching unit 122 by a signal line 157. The signal lines 151, 153, 155 and 157 may be individual lines of a data bus such as a hublink data bus (HL2.0). As indicated above, a hublink data bus is a low pincount high speed point-to-point bus. Other types of data buses are also within the scope of the present invention.

The interconnections between the first switch 102, the second switch 104 and the serverlets 112, 114, 116 and 118 will now be described with respect to FIG. 6. Other connections are also within the scope of the present invention. The first switch 102 may be coupled through its ports as follows: (1) to the first serverlet 112 by a signal line 131; (2) to the second serverlet 114 by a signal line 133; (3) to the third serverlet 116 by a signal line 135; and (4) to the fourth serverlet 118 by a signal line 137. The second switch 104 may be coupled through its ports as follows: (1) to the first serverlet 112 by a signal line 141; (2) to the second serverlet 114 by a signal line 143; (3) to the third serverlet 116 by a signal line 145; and to the fourth serverlet 118 by a signal line 147. The signal lines 131, 133, 135,137, 141, 143, 145 and 147 may be individual lines of a data bus such as a hublink data bus (HL2.0) to provide communication between (1) the first and second switches 102, 104 and (2) the serverlets 112, 114, 116 and 118. Other types of data buses are also within the scope of the present invention.

The system module configuration may provide unique advantages not previously recognized. For example, by utilizing a hublink data bus as in the above described configuration, then interfaces may be provided between component parts without additional chipset cost. In disadvantageous embodiments, when communicating between a switch fabric network and disk storage, then numerous format conversions may occur such as from a peripheral component interconnect (PCI) to a small computer system interface (SCSI) so as to talk to a RAID controller. By utilizing the hublink data bus and the serverlet configuration as described above, the hublink data bus may be coupled to the switching unit 122 and the switched fabric network. Furthermore, the RAID/switching unit interface may allow each serverlet 112, 114, 116 and 118 to believe it has its own disk system for boot, swap and configuration information. This may reduce the number of required disk systems. Still further, the point-to-point hublink connections allow the serverlets 112, 114, 116 and 118 to be hot plugged such that the chassis (of the single assembly) may remain powered up when one of the serverlets 112, 114, 116 and 118 is unplugged.

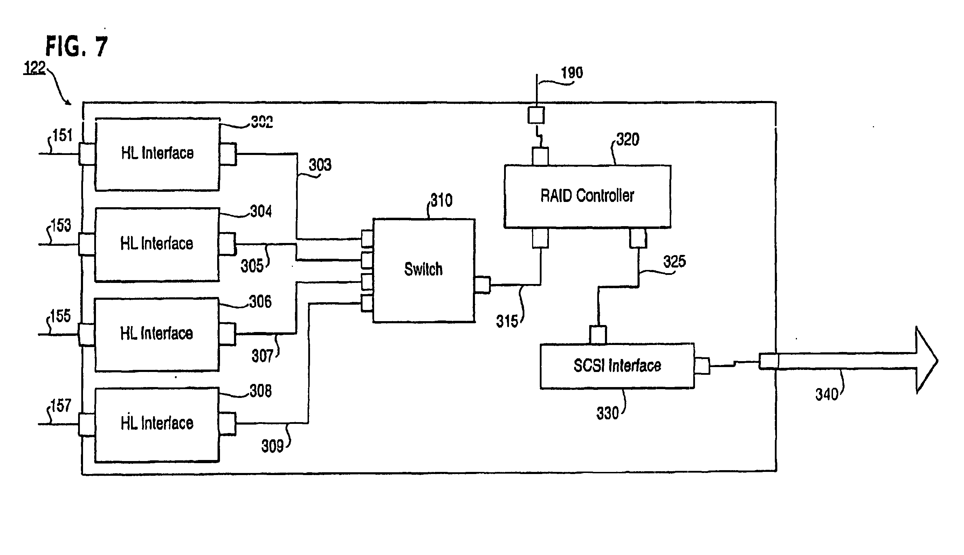

FIG. 7 is a diagram of the switching unit 122 according to an example embodiment of the present invention. Other embodiments and configurations of the switching unit 122 are also within the scope of the present invention. As shown in FIG. 7, the switching unit 122 may include a first interface device 302, a second interface device 304, a third interface device 306 and a fourth interface device 308. The switching unit 122 may further include a switching unit 310, a RAID controller unit 320 and a SCSI interface device 330. The first interface device 302 may be coupled to the signal line 151, which is coupled to the first serverlet 112. The second interface device 304 may be coupled to the signal line 153, which is coupled to the second serverlet 114. The third interface device 306 may be coupled to the signal line 155, which is coupled to the third serverlet 116. The fourth interface device 308 may be coupled to the signal line 157, which is coupled to the fourth serverlet 118. Each of the interface devices 302, 304, 306 and 308 may appropriately process signals across the data bus (comprising at least lines 151, 153, 155 and 157) into the appropriate format. The first interface device 302 may be coupled to the switching unit 310 by a signal line 303, the second interface device 304 may be coupled to the switching unit 310 by a signal line 305, the third interface device 306 may be coupled to the switching unit 310 by a signal line 307, and the fourth interface device 308 may be coupled to the switching unit 310 by a signal line 309. The RAID controller unit 320 may operate based on a signal or signals sent from the server management interface unit 124 along a signal line 190. The RAID controller unit 320 may be coupled to the switching unit 310 by a signal line 315 and may control the switching unit 310 based on a signal or signals sent across the signal line 315. The RAID controller unit 320 may also be coupled to the interfacing device 330 by a signal line 325. The SCSI interfacing device 330 may be further coupled to a bus 340. The bus 340 may be formed, for example, by a SCSI bus, an Extension to Industry Standard Architecture (EISA) bus, an Industry Standard Architecture (ISA) bus, or a Peripheral Component Interface (PCI) bus. The bus 340 may form a communication path to and from peripheral devices coupled thereto. The bus 340 may be coupled to the backplane 170 (FIG. 5), which may be coupled, in turn, to the first disk system 182 and the second disk system 184 as described above. Accordingly, the RAID controller unit 320 may be coupled to the hublink data bus and make each serverlet 112, 114, 116 and 118 believe it has exclusive access to the boot/swap/configdisk storage in the first disk system 182 and the second disk system 184. The operating system on each serverlet may then have access to a disk so as to store operating system related information. The switching unit 310 and the RAID controller unit 320 may have the proper control and logic capabilities to take a coupled disk system and divide it into multiple logical disks. The switching unit 310 and the RAID controller unit 320 may then isolate each logical disk from the other serverlets so that each serverlet believes it has sole access to the disk system. Thus, a plurality of serverlets may be configured within one chassis (or assembly) with one set of disks rather than a set for each one of the serverlets. Other numbers of serverlets and disk systems are also within the scope of the present invention.

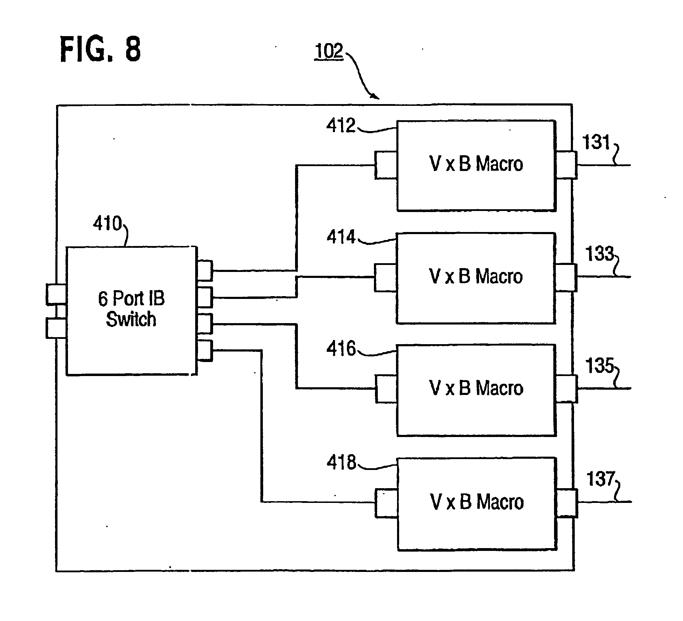

FIG. 8 shows a diagram of the first switch 102 coupled to the switch fabric network according to an example embodiment of the present invention. Other configurations and embodiments are also within the scope of the present invention. The second switch 104 may have a similar configuration as the first switch 102.

As shown in FIG. 8, the first switch 102 may include a first conversion unit 412, a second conversion unit 414, a third conversion unit 416 and a fourth conversion unit 418, which are coupled to receive signals across the data bus such as a hublink data bus comprising signal lines 131, 133, 135 and 137. For example, the first conversion unit 412 may be coupled to the signal line 131, the second conversion unit 414 may be coupled to the signal line 133, the third conversion unit 416 may be coupled to the signal line 135 and the fourth conversion unit 418 may be coupled to the third signal line 135. Each of the conversion units 412, 414, 416 and 418 may be coupled to a switching unit 410, which may be coupled in turn to the switch fabric network described above. Each of the conversion units 412, 414, 416 and 418 converts to or from the appropriate format (such as HL2.0) for the data bus comprising lines 131, 133, 135 and 137. The switching unit 410 may be a six port switch that allows any port to communicate to any other port without being blocked by other ports talking to each other. For example, a first port may communicate with a second port while a third port may communicate with a fourth port. Integrating the switch may allow for significantly fewer cables to connect the four serverlets to the external network.

In accordance with the above description, embodiments of the present invention may provide a system module for coupling a switch fabric network to I/O resources. The system module may include a plurality of serverlets, and a first switching device coupled to each of the serverlets and to the I/O resources such that the plurality of serverlets share I/O resources.

The present invention has been described with reference to a number of example embodiments and configurations. Numerous modifications and other embodiments can be devised by those skilled in the art. More particularly, reasonable variations and modifications are possible in the component parts and/or arrangements of the subject combination arrangement within the scope of the foregoing disclosure, the drawings and the appended claims.

## Claims

1. A system module (100) to couple multiple servers to input/output (I/O) resources (182, 184), the system module (100) comprising:
a first switching device (122) to couple to each of a first serverlet (112) and a second serverlet (114) and to said I/O resources (182, 184) such that said first serverlet (112) and said second serverlet (114) share said I/O resources (182, 184); and
a second switching device (102) to couple to a switch fabric network and to the first (112) and second serverlets (114),
said system being **characterized in that** the system module comprises:
a third switching device (104) to couple to said switch fabric network, and at least one data bus to couple said first serverlet (112) to said second (102) and third (104) switching devices and to couple said second serverlet (114) to said second (102) and third (104) switching devices.

2. The system module (100) of claim 1, wherein said I/O resources (182, 184) comprise a first disk system (182) and a second disk system (184).

3. The system module (100) of claim 1, wherein the first serverlet (112) comprises first memory devices (52, 54, 56, 58), a first processing unit (66), a first power conversion unit (60) and a first interfacing unit (62) to couple said first processing unit (66) to said first memory devices (52, 54, 56, 58).

4. The system module (100) of claim 3, wherein the second serverlet (114) comprises second memory devices (52, 54, 56, 58), a second processing unit (66), a second power conversion unit (60) and a second interfacing unit (62) to couple said second processing unit (66) to said second memory devices (52, 54, 56, 58).

5. The system module (100) of claim 1, wherein the switch fabric network comprises one of an Infiniband network, an Ethernet network and a Fibre Channel network.

6. The system module (100) of claim 1, wherein said second switching device (102) comprises a first conversion unit (412) to couple to said data bus, a second conversion unit (414) to couple to said data bus, and a switching device (410) to couple to said switch fabric network and to each of said first conversion unit (412) and said second conversion unit (414).

7. The system module (100) of claim 1, wherein said first switching device (122) comprises:
a first interface device (151) to couple to said first serverlet (112);
a second interface device (153) to couple to said second serverlet (114);
a switching device (310) to couple to said first interface device (151) and said second interface device (153); and
a controller device (320) to couple to said switching device (310) and to a data bus that is coupled to said I/O resources (182,184).

8. The system module (100) of claim 7, further comprising a third interface device (330) to couple between said controller device (320) and said data bus.

## Patentansprüche

1. Systemmodul (100) zum Koppeln mehrerer Server mit Eingabe/Ausgabe (I/O) Ressourcen (182, 184), wobei das Systemmodul (100) umfasst:
eine erste Schaltvorrichtung (122) zum Koppeln mit jedem eines ersten Serverlets (112) und eines zweiten Serverlets (114) und mit den I/O Ressourcen (182, 184), so dass das erste Serverlet (112) und das zweite Serverlet (114) sich die I/O Ressourcen (182, 184) teilen; und
eine zweite Schaltvorrichtung (102) zum Koppeln mit einem Switch Fabric Netzwerk und mit dem ersten (112) und dem zweiten Serverlet (114),
wobei das System **dadurch gekennzeichnet ist, dass** das Systemmodul umfasst:
eine dritte Schaltvorrichtung (104) zum Koppeln mit dem Switch Fabric Netzwerk und
mindestens einen Datenbus zum Koppeln des ersten Serverlets (112) mit der zweiten (102) und dritten (104) Schaltvorrichtung und zum Koppeln des zweiten Serverlets (114) mit der zweiten (102) und dritten (104) Schaltvorrichtung.

2. Systemmodul (100) gemäß Anspruch 1, wobei die I/O Ressourcen (182, 184) ein erstes Disksystem (182) und ein zweites Disksystem (184) umfassen.

3. Systemmodul (100) gemäß Anspruch 1, wobei das erste Serverlet (112) erste Speichervorrichtungen (52, 54, 56, 58), eine erste Verarbeitungseinheit (66), eine erste Leistungs-Umsetzungseinheit (60) und eine erste Schnittstelleneinheit (62) zum Koppeln der ersten Verarbeitungseinheit (66) mit den ersten Speichervorrichtungen (52, 54, 56, 58) umfasst.

4. Systemmodul (100) gemäß Anspruch 3, wobei das zweite Serverlet (114) zweite Speichervorrichtungen (52, 54, 56, 58), eine zweite Verarbeitungseinheit (66), eine zweite Leistungs-Umsetzungseinheit (60) und eine zweite Schnittstelleneinheit (62) zum Koppeln der zweiten Verarbeitungseinheit (66) mit den zweiten Speichervorrichtungen (52, 54, 56, 58) umfasst.

5. Systemmodul (100) gemäß Anspruch 1, wobei das Switch Fabric Netzwerk ein von einem Infiniband Netzwerk, einem Ethernet Netzwerk und einem Fibre Channel Netzwerk umfasst.

6. Systemmodul (100) gemäß Anspruch 1, wobei die zweite Schaltvorrichtung (102) eine erste Umsetzungseinheit (412) zum Koppeln mit dem Datenbus, eine zweite Umsetzungseinheit (414) zum Koppeln mit dem Datenbus und eine Schaltvorrichtung (410) zum Koppeln mit dem Switch Fabric Netzwerk und mit jeder der ersten Umsetzungseinheit (412) und der zweiten Umsetzungseinheit (414) umfasst.

7. Systemmodul (100) gemäß Anspruch 1, wobei die erste Schaltvorrichtung (122) umfasst:
eine erste Schnittstellenvorrichtung (151) zum Koppeln mit dem ersten Serverlet (112);
eine zweite Schnittstellenvorrichtung (153) zum Koppeln mit dem zweiten Serverlet (114);
eine Schaltvorrichtung (310) zum Koppeln mit der ersten Schnittstellenvorrichtung (151) und der zweiten Schnittstellenvorrichtung (153); und
eine Steuervorrichtung (320) zum Koppeln mit der Schaltvorrichtung (310) und mit einem Datenbus, der mit den I/O Ressourcen (182, 184) gekoppelt ist.

8. Systemmodul (100) gemäß Anspruch 7, das ferner eine dritte Schnittstellenvorrichtung (330) zum Koppeln zwischen der Steuervorrichtung (320) und dem Datenbus umfasst.

## Revendications

1. Module (100) de système pour coupler de multiples serveurs à des ressources (182, 184) d'entrée/sortie (E/S), le module (100) de système comprenant :
un premier dispositif (122) de commutation pour se coupler à chacun d'un premier servlet (112) et d'un deuxième servlet (114) et auxdites ressources (182, 184) d'E/S, de manière à ce que ledit premier servlet (112) et ledit deuxième servlet (114) partagent lesdites ressources (182, 184) d'E/S ; et
un deuxième dispositif (102) de commutation pour se coupler à un réseau matrice de commutation et aux premier (112) et deuxième (114) servlets,
ledit système étant **caractérisé en ce que** le module de système comprend :
un troisième dispositif (104) de commutation pour se coupler audit réseau matrice de commutation, et au moins un bus de données pour coupler ledit premier servlet (112) auxdits deuxième (102) et troisième (104) dispositifs de commutation, et pour coupler ledit deuxième servlet (114) auxdits deuxième (102) et troisième (104) dispositifs de commutation.

2. Module (100) de système selon la revendication 1, dans lequel lesdites ressources (182, 184) d'E/S comprennent un premier système (182) à disque et un deuxième système (184) à disque.

3. Module (100) de système selon la revendication 1, dans lequel le premier servlet (112) comprend des premiers dispositifs (52, 54, 56, 58) de mémoire, une première unité (66) de traitement, une première unité (60) de conversion de puissance et une première unité (62) d'interfaçage pour coupler ladite première unité (66) de traitement auxdits premiers dispositifs (52, 54, 56, 58) de mémoire.

4. Module (100) de système selon la revendication 3, dans lequel le deuxième servlet (114) comprend des deuxièmes dispositifs (52, 54, 56, 58) de mémoire, une deuxième unité (66) de traitement, une deuxième unité (60) de conversion de puissance et une deuxième unité (62) d'interfaçage pour coupler ladite deuxième unité (66) de traitement auxdits deuxièmes dispositifs (52, 54, 56, 58) de mémoire.

5. Module (100) de système selon la revendication 1, dans lequel le réseau matrice de commutation comprend un réseau parmi un réseau Infiniband, un réseau Ethernet et un réseau Fibre Channel.

6. Module (100) de système selon la revendication 1, dans lequel ledit deuxième dispositif (102) de commutation comprend une première unité (412) de conversion pour se coupler audit bus de données, une deuxième unité (414) de conversion pour se coupler audit bus de données, et un dispositif (410) de commutation pour se coupler audit réseau matrice de commutation et à chacune de ladite première unité (412) de conversion et de ladite deuxième unité (414) de conversion.

7. Module (100) de système selon la revendication 1, dans lequel ledit premier dispositif (122) de commutation comprend :
un premier dispositif (151) d'interface pour se coupler audit premier servlet (112) ;
un deuxième dispositif (153) d'interface pour se coupler audit deuxième servlet (114) ;
un dispositif (310) de commutation pour se coupler audit premier dispositif (151) d'interface et audit deuxième dispositif (153) d'interface ; et
un dispositif (320) de commande pour se coupler audit dispositif (310) de commutation et à un bus de données qui est couplé auxdites ressources (182, 184) d'E/S.

8. Module (100) de système selon la revendication 7, comprenant en outre, un troisième dispositif (330) d'interface pour être couplé entre ledit dispositif (320) de commande et ledit bus de données.
